# EUROPEAN PATENT SPECIFICATION

(11) **EP 4 130 505 B1**
(45) Date of publication and mention of the grant of the patent: **01.11.2023**
(21) Application number: 21382746.2
(22) Date of filing: 06.08.2021
(51) Int. Cl.: F16D 65/10, F16D 65/82

(54) **DRUM AND DRUM BRAKE FOR VEHICLES**
TROMMELBREMSE UND TROMMELBREMSE FÜR FAHRZEUGE
TAMBOUR ET FREIN À TAMBOUR POUR VÉHICULES

(43) Date of publication of application: 08.02.2023
(73) Proprietor: Edertek, S.Coop, 20500 Arrasate - Mondragon (ES)
(72) Inventor: LABRADOR VAREA, Ricardo, 48200 Durango (ES); EGUIDAZU UNAMUNO, Nerea, 48230 Elorrio (ES); PRIETO VARONA, Jose Ignacio, 20550 Aretxabaleta (ES)
(74) Representative: Igartua, Ismael

(56) References cited:
- WO-A1-2019/063034
- GB-A- 890 321
- US-A- 3 113 647
- US-B2- 9 322 446

## Description

### TECHNICAL FIELD

The present invention relates to drums and drum brakes for vehicles.

### PRIOR ART

A vehicle comprises a braking system by means of which a user of the vehicle can voluntarily cause the vehicle to stop or slow down. The braking system comprises a drum brake, or a disc brake, which is associated with each wheel of the vehicle. To provide the required braking, a disc brake comprises a brake disc and brake pads which rub against an outer braking surface of the disc, and a drum brake comprises a drum and braking shoes which rub against an inner braking surface of the drum.

Given that the brake material has to withstand the heat generated during braking, it is essential to use materials with high thermal resistance, in addition to a relative hardness to withstand friction against the braking surface. In the case of drum brakes, heat dissipation is particularly relevant, since the concentration of heat is generated in a closed environment, where the shoes act against the inner braking surface of the drum.

Generally, to achieve the required resistance, drums are manufactured as a single part from alloyed iron, such as cast iron, for example, and to improve dissipation into the atmosphere of the heat that is generated when braking, the drum may comprise a heat dissipating mass in the form of fins radially projecting out of the drum. For example, patent documents EP3181936A1, EP3175135A1, or EP2326854A1 show drums manufactured as a single part with radial fins for dissipating heat.

However, the cast iron used to manufacture the drum is a material with a relatively high density. The weight of the drum pertains to the non-suspended mass, so the reduction thereof reduces not only CO₂ emissions, but also improves the dynamic performance of the vehicle. The use of aluminium, which is a lightweight material and furthermore has good thermal properties for dissipating heat, is known to reduce weight. Nevertheless, standard aluminium alloys do not present the necessary resistance; therefore, as shown in the example of patent document US20140144735A1, are known drums manufactured in two parts, an inner ring made of iron defining the braking surface against which the braking shoes act and providing the necessary hardness, and an outer enclosure made of aluminium which reduces weight and helps to dissipate the heat generated in the inner ring. Although this solution meets hardness and thermal dissipation requirements, the integration of the ring made of iron in the enclosure made of aluminium complicates and increases the price of manufacturing the drum.

EP3181936A1 shows a drum manufactured as a single part made of cast iron, preferably by sand casting, although it is also suggested that it can be manufactured in steel or aluminium. The drum comprises a central axis, a rear wall for being connected to a wheel and extending perpendicular to the central axis, a circumferential wall extending parallel to the central axis, and a transition area attaching the circumferential wall with the rear wall, the circumferential wall has an inner face and an outer face which is opposite the inner face, the inner face defines a braking surface for being contacted by braking shoes, and the outer face has a heat dissipating mass projecting radially from the outer face.

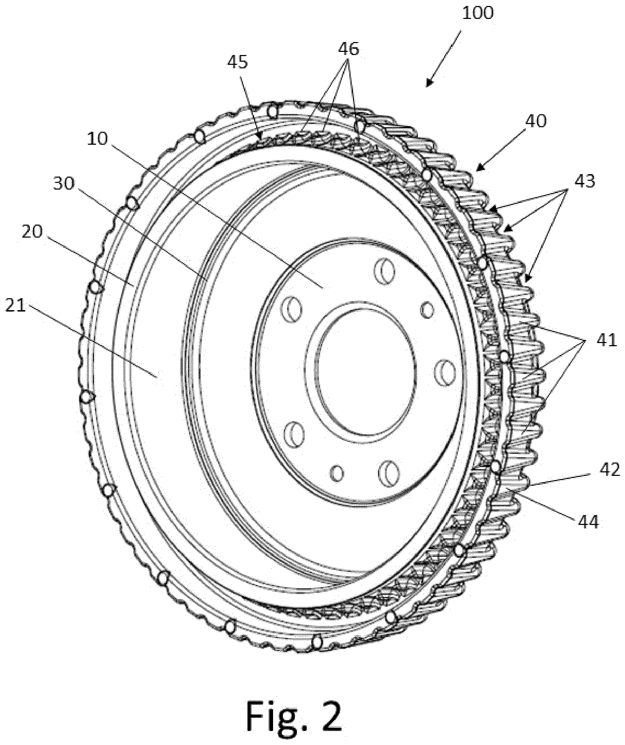

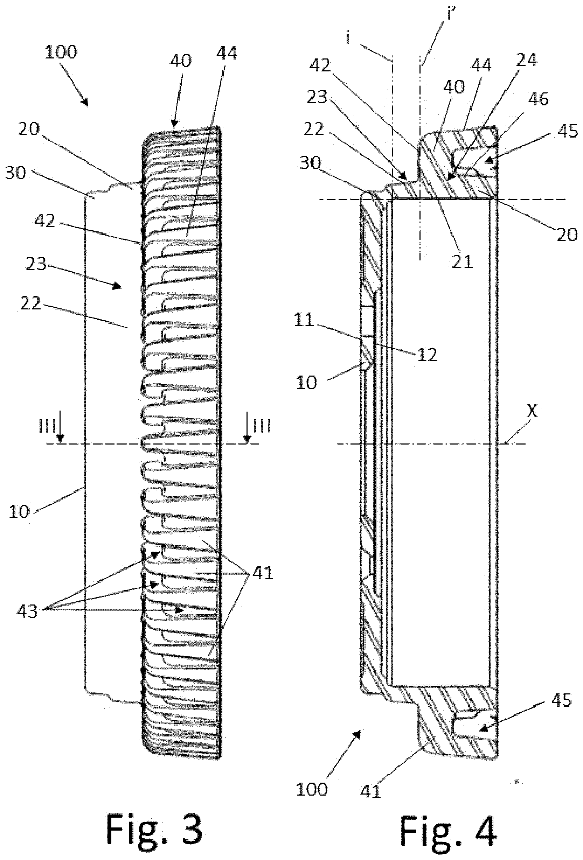

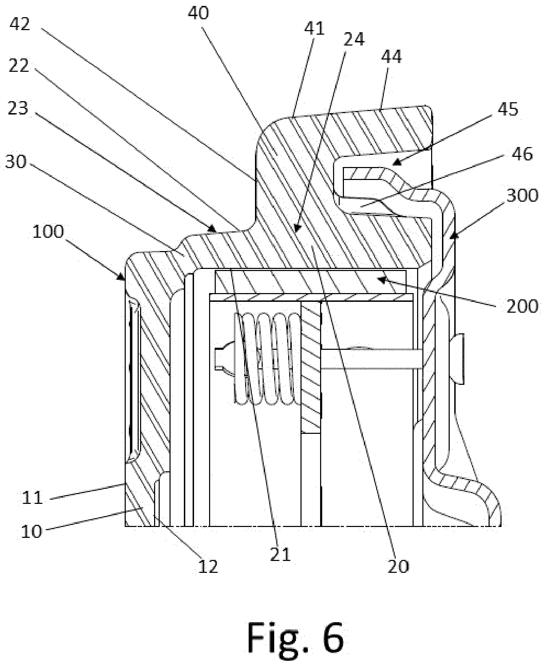

As observed in detail in the cross-section view of Figure 6 of EP3181936A1, the heat dissipating mass extends directly from the transition area attaching the rear wall with the circumferential wall, such that the mass is arranged completely covering the outer face of the drum, such that the heat dissipating mass stiffens the attachment between the transition area and the circumferential wall. In some embodiments, such as those of Figures 2 and 4, the mass even comprises a plurality of fins which cover both the circumferential wall and the transition area and also the rear wall. In this case, the heat dissipating mass stiffens the attachment between the transition area and the circumferential wall, as well as the attachment between the transition area and the rear wall.

US3113647A shows a drum of aluminium alloy with a rear wall and a circumferential wall having an embedded metallic wear liner forming a braking surface and a series of integral reinforcing ribs provided on the external surfaces of the circumferential wall which serves as cooling fins.

GB890321A shows another drum of aluminium alloy with a rear wall and a circumferential wall having an inner cast iron liner forming a braking surface and a series of circumferentially spaced axially extending heat dissipating ribs that are integrally cast with the circumferential wall.

WO2019063034A1 shows a brake disc made of a hypereutectic aluminium-silicon alloy.

### DISCLOSURE OF THE INVENTION

The object of the invention is to provide a drum and a drum brake for vehicles, as defined in the claims.

One aspect of the invention relates to a drum manufactured as a single part from aluminium alloy and comprising a central axis, a rear wall for being connected to a wheel and extending perpendicular to the central axis, a circumferential wall extending parallel to the central axis, and a transition area attaching the circumferential wall with the rear wall; the circumferential wall has an inner face and an outer face which is opposite the inner face, the inner face defines a braking surface for being contacted by braking shoes, and the outer face has a heat dissipating mass projecting radially from the outer face. The circumferential wall has in the outer face a first segment free of heat dissipating mass extending from the transition area and a second segment in which the heat dissipating mass is arranged and extends from the first segment, such that the circumferential wall is thicker in the second segment than in the first segment. The inner face is parallel to the central axis and extends from a first point which is attached to the transition area and contained in a first imaginary plane perpendicular to the central axis, and the heat dissipating mass has a wall extending from the first segment, from an intersection point which is defined between the wall and the first segment, with the intersection point being contained in a second imaginary plane perpendicular to the central axis. The first imaginary plane is separated from the second imaginary plane by a distance of at least 5 mm and the wall of the heat dissipating mass is a vertical wall extending from the first segment perpendicular to the central axis, with the vertical wall being contained in the second imaginary plane.

The drum is therefore manufactured as a single part, whereby simplifying its manufacture with respect to drums of the state of the art which are manufactured as two parts (with an inner ring made of iron which must be integrated in an outer enclosure made of aluminium).

Furthermore, the drum is manufactured from an aluminium alloy which reduces weight and improves heat dissipation. The alloy has been defined for the drum to be able to be manufactured in a casting process without any subsequent coating, assuring the resistance and tribological performance needed for this application.

Particularly, the absence of heat dissipating mass in the first segment of the circumferential wall allows the attachment between the circumferential wall and the transition area to be flexible. Therefore, when the braking shoes act on the braking surface exerting a force in a pushing direction perpendicular to the central axis, said attachment slightly deforms and causes the inner face of the drum to remain substantially parallel to the central axis of the drum, and therefore the contact surface between the shoe and the braking surface is maximized. This same effect is produced by the deformation induced when heating the drum, the proposed design minimizing this deformation, improving the braking capacity and providing a uniform wear of the friction material of the shoe.

In the patent documents from the state of the art showing drums manufactured as a single part, such as EP3181936A1, for example, the heat dissipating mass completely covers the outer face of the circumferential wall, such that the attachment between the circumferential wall and the transition area is stiffened, and when the braking shoes act on the braking surface, the inner face of the circumferential wall tends to pivot on said attachment between the circumferential wall and the transition area. Therefore, during braking, the inner face is arranged obliquely with respect to the central axis of the drum, and the shoes do not act on the entire braking surface, but rather tend to exercise more pressure in the area close to the transition area, increasing the temperature in said area, reducing the braking efficacy and producing a non-proportional wear of the friction material of the shoes which even further reduces the braking efficacy over time.

Another aspect of the invention relates to a drum brake for vehicles having a drum such as the one described above.

These and other advantages and features of the invention will become apparent in view of the figures and detailed description of the invention.

### DESCRIPTION OF THE DRAWINGS

Figure 1 shows a rear perspective view of an example of the drum of the invention.
Figure 2 is a front perspective view of the drum of Figure 1.
Figure 3 shows a side view of the drum of Figure 1.
Figure 4 shows a radial cross-section view of section III-III indicated in Figure 3.
Figure 5 shows an enlarged detail of the upper end of the cross-section view of Figure 4.
Figure 6 shows a partial cross-section view of a brake drum comprising the drum of Figure 1.
Figure 7 schematically shows the deformation sustained during braking by the circumferential wall of a drum having a heat dissipating mass which completely covers the outer face of the circumferential wall.
Figure 8 schematically shows the deformation sustained during braking by the circumferential wall of the drum of the previous figures.
Figure 9 shows comparative graphs of the deformation sustained during braking by the circumferential wall of the depiction of Figure 7 with respect to the depiction of Figure 8.

### DETAILED DISCLOSURE OF THE INVENTION

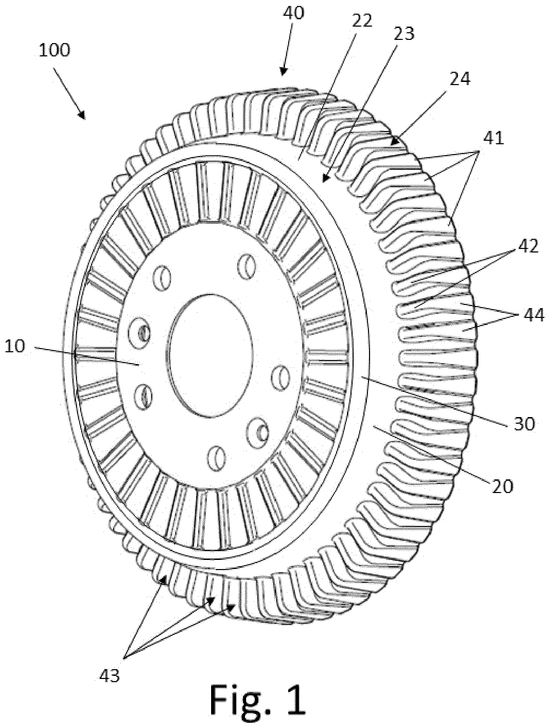

Figures 1 to 6 show a non-limiting example of the drum 100 of the invention.

The drum 100 comprises a central axis X, a rear wall 10 for being connected to a wheel and extending perpendicular to the central axis X, a circumferential wall 20 extending parallel to the central axis X, and a transition area 30 attaching the circumferential wall 20 with the rear wall 10.

The drum 100 has an axial symmetrical shape around the central axis X and said central axis X coincides with the rotational axis of the wheel when the drum 100 is mounted in the wheel. The drum 100 defines a housing for arranging a plate 300 supporting the operative elements of a drum brake.

The transition area 30 for attaching the rear wall 10 with the circumferential wall 20 may present different geometries. The rear wall 10 can even be directly attached with the circumferential wall 20 forming a 90° attachment, since the rear wall is perpendicular to the central axis X, and the circumferential wall is parallel to the central axis X. In such case, the transition area 30 is directly the attachment between the walls 10 and 20.

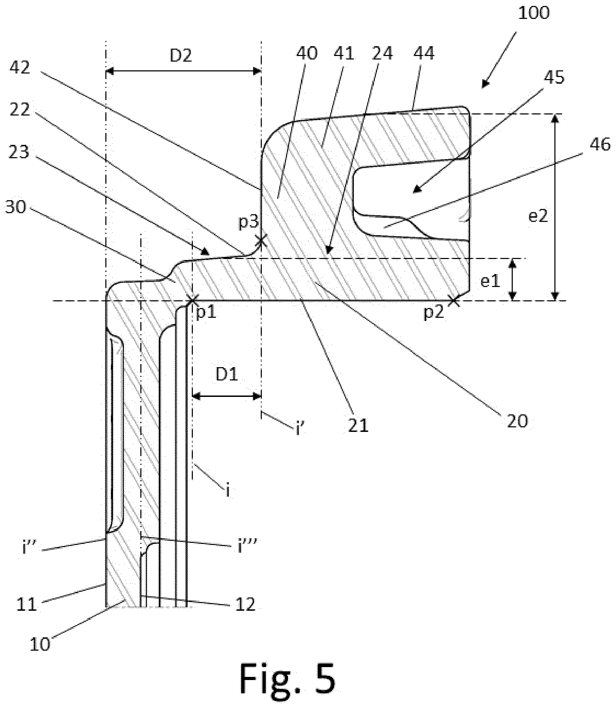

As observed in detail in Figures 4 and 5, the circumferential wall 20 has an inner face 21 and an outer face 22 which is opposite the inner face 21. The inner face 21 defines a braking surface for being contacted by braking shoes 200 (see Figure 6), and the outer face 22 of the circumferential wall 20 has a heat dissipating mass 40 projecting radially from the outer face 22. The heat dissipating mass 40 conducts the heat generated during braking outwards when the braking shoes 200 act on the braking surface according to a pushing direction perpendicular to the central axis X.

The circumferential wall 20 has in the outer face 22 a first segment 23 free of heat dissipating mass 40 extending from the transition area 30 and a second segment 24 in which the heat dissipating mass 40 is arranged and extends from the first segment 23, such that the circumferential wall 20 is thicker in the second segment 24 than in the first segment 23.

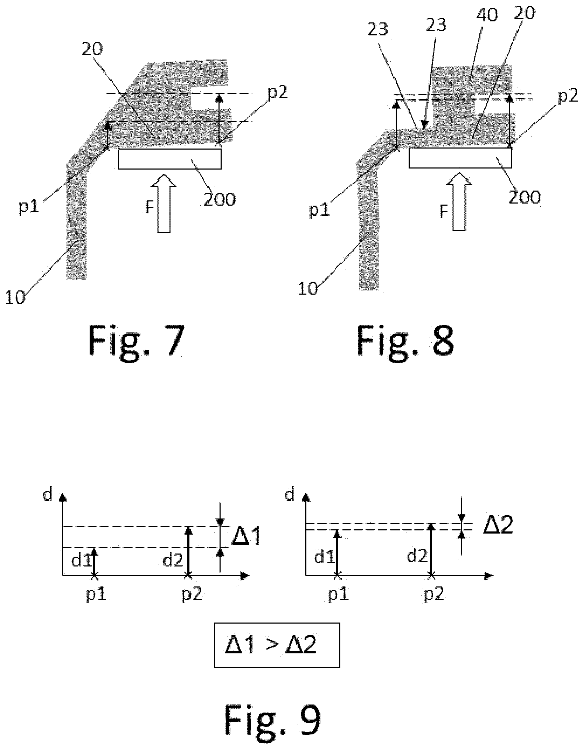

The heat dissipating mass 40 is a protrusion of the circumferential wall 20 projecting radially from the outer face 22 around the central axis X increasing the thickness e2 of the second segment 24 of said wall 20. The heat dissipating mass 40 increases the stiffness of the second segment 24 of the circumferential wall 20 so as to withstand the pressure exerted by the shoes 200 during braking, and directs the heat concentrated in the braking surface inside the drum towards the free end of the circumferential wall 20. Moreover, the absence of heat dissipating mass 40 in the first segment 23 makes the attachment between the circumferential wall 20 and the transition area 30 more flexible, which allows the contact of the shoes 200 on the braking surface during braking to be improved as will be explained below in relation to Figures 7, 8 and 9.

The inner face 21 is parallel to the central axis X and extends from a first point p1 which is attached to the transition area 30 and contained in a first imaginary plane i perpendicular to the central axis X, and the heat dissipating mass 40 has a wall 42 extending from the first segment 23, from an intersection point p3 which is defined between the wall 42 and the first segment 23, with the intersection point p3 being contained in a second imaginary plane i' perpendicular to the central axis X, and wherein the first imaginary plane i is separated from the second imaginary plane i' by a distance D1 of at least 5 mm. See Figure 5.

It has experimentally been found that the distance D1 of 5 mm is the suitable minimum distance which the first segment 23 free of heat dissipating mass 40 must have in order to improve the flexibility of the attachment between the circumferential wall 20 and the transition area 30 while the drum 100 maintains suitable mechanical strength properties.

The inner face 21 extends in a predetermined axial direction between a first end p1, corresponding with the first point p1, which is attached to the transition area 30 and a second free end p2, opposite the first end p1. The braking surface defined in the inner face 21 completely or partially occupies the inner face 21. The braking surface coincides with the contact surface established between the braking shoe 200 and the inner face 21 when braking occurs. See Figure 6.

Preferably, the circumferential wall 20 has in the first segment 23 a mean thickness e1 of at least 3 mm. The mean thickness e1 corresponds with the height of the circumferential wall 20 at a midpoint between the two imaginary planes i and i'.

Even more preferably, the circumferential wall 20 has in the second segment 24 a mean thickness e2 of at least 8 mm cm. The mean thickness e2 corresponds with the height of the circumferential wall 20 at a midpoint between the second imaginary plane i' and an imaginary plane perpendicular to the central axis X passing through the second free end p2 of the inner face 21.

The joint effect of the distance D1 and of the thickness e1, and additionally the thickness e2, allows the flexibility of the attachment between the circumferential wall 20 and the transition area 30 to be improved, while the drum 100 maintains suitable mechanical strength and heat dissipation properties.

According to the invention, as observed in detail in Figure 5, the wall 42 of the heat dissipating mass 40 is a vertical wall 42 extending from the first segment 23 perpendicular to the central axis X, with the vertical wall 42 being contained in the second imaginary plane i', which is perpendicular to the central axis X. Therefore, between the two imaginary planes i and i' there is no heat dissipating mass 40, and the mass 40 projects vertically and directly from the attachment between the segments 23 and 24 of the circumferential wall 20, i.e., from the intersection point p3. The presence of heat dissipating mass 40 in the second segment 24 is thereby maximized.

Preferably, as shown in the example of the figures, the heat dissipating mass 40 comprises a plurality of fins 41 projecting radially from the outer face 22 of the circumferential wall 20 and arranged in a circumferential succession around the central axis X.

The heat dissipating mass 40 further comprises channels 43 for air circulation which are arranged in a circumferential succession around the central axis X between the fins 41. The channels 43 favor airflow between the fins 41, improving heat dissipation.

Alternatively, the heat dissipating mass 40 can be an annular mass without channels or fins circumferentially enclosing the second segment 24 of the outer face 22 of the circumferential wall 20.

Each fin 41 has a vertical wall 42 extending from the first segment 23 perpendicular to the central axis X and a horizontal wall 44 extending from vertical wall 42 in a manner substantially parallel to the central axis X. The vertical walls 42 of the fins 41 correspond with the vertical wall 42 of the heat dissipating mass 40 and are contained in the second imaginary plane i' perpendicular to the central axis X.

The horizontal wall 44 of the fins 41 has a triangular shape, the thickness of the fin 41 being reduced towards the vertical wall 42. Therefore, the fins 41 have a lower thickness in the area close to the first segment 23 of the wall 20. Said triangular shape favors airflow between the fins 41 and therefore improves heat dissipation. Furthermore, the reduction of thickness of the fins 41 axially towards the first segment 23 improves the flexibility of the attachment of the circumferential wall 20 with the transition area 30, since there is less heat dissipating mass 40 in that area.

As observed in Figures 1 and 3, the channels 43 for air circulation extend radially between the vertical walls 42 and axially between the horizontal walls 44 of the fins 41. Therefore, the channels 43 define recesses of the heat dissipating mass 40 in a radial direction relative to the central axis X and in a direction parallel to the central axis X. In addition to favoring heat dissipation, the channels 43 also favor the flexibility of the attachment of the circumferential wall 20 with the transition area 30, since the channels 43 generate empty gaps in the heat dissipating mass 40.

The rear wall 10 has an outer face 11 for being connected to the wheel, and an inner face 12, opposite the outer face 11. The outer face 11 of the rear wall 10 is contained in a third imaginary plane i" perpendicular to the central axis X, and the inner face 12 is contained in a fourth imaginary plane i‴ perpendicular to the central axis X. The separation between the third imaginary plane i" and the fourth imaginary plane i‴ corresponds with the thickness of the rear wall 10.

The drum 100 has an inner space formed by the inner face 21 of the circumferential wall 20 and the inner face 12 of the rear wall 10 for containing the braking shoes 200 and other operative elements of the drum brake.

The transition area 30 extends between the first imaginary plane i and the fourth imaginary plane i'". In the event that the rear wall 10 is directly attached with the circumferential wall 20 forming a 90° attachment, the first and fourth imaginary planes i and i‴ are coplanar.

The drum 100 shown in Figures 1 to 6 is used in a 9-inch drum brake; however, the drum 100 of the invention is applicable in drum brakes of other dimensions, without this altering the concept of the invention.

Preferably, the second imaginary plane i' is separated from the third imaginary plane i" by a distance D2 of at least 27 mm.

The heat dissipating mass 40 of the example of the figures has an annular groove 45 which is arranged between the horizontal wall 44 of the fins 41 and the circumferential wall 20 for arranging a plate 300 supporting the operative elements of a drum brake. See Figure 6.

The annular groove 45 has protrusions 46 projecting radially from the outer face 22 of the circumferential wall 20 and extending through the inside of the annular groove 45 parallel to the central axis X.

Figure 6 shows a partial view of a drum brake for vehicles comprising the drum 100 shown in Figures 1 to 5. The drum brake comprises the drum 100 and the plate 300 having the braking shoes 200 and other operative elements of the drum brake, such as the hydraulic cylinders operating the shoes 200 and the springs for recovering the standby position of the shoes 200 after exerting the braking. The drum brake can have different configurations, such as simplex, duplex, twinplex, or duo servo. The operative elements of a drum brake and the configurations thereof are known in the state of the art and therefore are not described.

The drum 100 is manufactured as a single part from aluminium alloy. It is preferably manufactured from a hypereutectic aluminium-silicon alloy. Said alloy allows a drum 100 to be obtained as a single part, with a reduced weight, good heat dissipation properties, and with a suitable hardness so as to withstand the friction generated between the shoes 200 and the braking surface. The use of alloys of this type for manufacturing discs used in vehicle disc brakes is known, but they have not been used in drums in which the stresses generated during braking are different, and therefore the structural design of the drum and the heat dissipation requirements are also different. Aluminium alloy has an elastic modulus that is less than that of cast iron; therefore, the first segment 23 free of heat dissipating mass 40 is needed to achieve close contact of the shoes 200 with the braking surface of the inner face 21 of the wall 20 during braking.

The hypereutectic aluminium-silicon alloy has a silicon content of 13 to 21% by weight and a maximum copper content of 0.3% by weight. The high silicon content increases the hardness and wear resistance of the braking surface, even at the high temperatures that are produced in the inner space of the drum during braking. The composition of the alloy has good corrosion resistance, such that surface treatments of the drum to reduce corrosion are not required.

Preferably, the hypereutectic aluminium-silicon alloy has between
13-21 % by weight of silicon, preferably between 16-20% by weight of silicon,
0.2-0.7% by weight of magnesium,
maximum 0.001 % by weight of strontium,
maximum 0.2% by weight of iron,
0.06-0.1% by weight of titanium,
maximum 0.3% by weight of copper, and
the rest aluminium.

The hypereutectic aluminium-silicon alloy preferably has uniformly distributed silicon particles. The particles have a primary silicon particle size of 30 to 100 µm, preferably of 30 to 50 µm, more preferably a maximum of 50 µm.

The drum made as a single part from the hypereutectic aluminium-silicon alloy is preferably obtained by means of casting. The drum can additionally be machined so as to polish surfaces and eliminate casting imperfections.

Figures 7 and 8 show an example of the deformation sustained by the circumferential wall 20 of the drum 100 manufactured as a single part from the hypereutectic aluminium-silicon alloy (see Figure 8) compared with the deformation sustained by the circumferential wall of a drum made from the same alloy, but with a heat dissipating mass which completely covers the outer face 22 of the circumferential wall (see Figure 7).

During braking, the shoes 200 act on the braking surface of the inner face 21 of the circumferential wall 20, exerting a force F in a pushing direction perpendicular to the central axis X. Given that the wall 20 is stiffly attached to the wall 10 through the transition area 30, that is, at the first end p1 of the inner face 21, and is free at the second end p2, when the shoe 200 acts on the braking surface, the circumferential wall 20 tends to pivot on the first end p1, such that the shoe 200 does not efficiently contact the braking surface and tends to exert greater pressure at the first end p1 than at the second end p2, where heat furthermore tends to be concentrated.

The hypereutectic aluminium-silicon alloy has a lower elasticity modulus than a cast iron alloy does, so the mass 40 circumferentially enclosing the drum 100, stiffening the wall 40, is necessary; however, by eliminating the mass 40 from the first segment 23, the attachment between the transition area 30 and the wall 20 is made more flexible, and the inner face 21 remains substantially parallel to the central axis of the drum during braking. Therefore, the contact surface between the shoe 200 and the braking surface is maximized.

As observed in the comparative view of Figures 7 and 8, when the shoe 200 acts on the braking surface, deformations with a vertical component are generated. If the first end p1 of the inner face 21 of the wall 20 is observed, in Figure 7 the deformation is less than in Figure 8. The smaller thickness of the wall 20 in the first segment 23 allows the wall 20 to deform, improving contact with the shoe 200.

Figure 9 shows two comparative graphs of the deformation sustained during braking by the circumferential wall of the depiction of Figure 7 with respect to the depiction of Figure 8. The vertical deformation components generated when the shoe 200 acts on the braking surface on points p1 and p2 are represented as displacement vectors d1 and d2, and the difference in displacement between vectors d1 and d2 of the drum of Figure 7 is depicted with delta1 Δ1, and the difference in displacement between vectors d1 and d2 of the drum of Figure 8 is depicted with delta2 Δ2. As can be observed, vector d1 of the drum of Figure 8 is considerably greater than vector d1 of the drum of Figure 7, and therefore delta1 Δ1 is greater than delta2 Δ2.

The effect of deformation has been slightly exaggerated in Figures 7, 8, and 9 so that the inclination of the inner face 21 of the wall 20 in comparison with the contact surface of the shoe 200 can be observed. In use, the plate 300 is inserted into the annular groove 45 and stiffens the second end p2, such that the contact between the shoe 200 and the braking surface of the drum 100 of Figure 8 is substantially parallel to the central axis X.

## Claims

1. Drum for a drum brake manufactured as a single part from aluminium alloy and comprising a central axis (X), a rear wall (10) for being connected to a wheel and extending perpendicular to the central axis (X), a circumferential wall (20) extending parallel to the central axis (X), and a transition area (30) attaching the circumferential wall (20) with the rear wall (10), the circumferential wall (20) has an inner face (21) and an outer face (22) which is opposite the inner face (21), the inner face (21) defines a braking surface for being contacted by braking shoes (200) of the drum brake, and the outer face (22) has a heat dissipating mass (40) projecting radially from the outer face (22), the circumferential wall (20) has in the outer face (22) a first segment (23) free of heat dissipating mass (40) extending from the transition area (30) and a second segment (24) in which the heat dissipating mass (40) is arranged and extends from the first segment (23), such that the circumferential wall (20) is thicker in the second segment (24) than in the first segment (23), the inner face (21) is parallel to the central axis (X) and extends from a first point (p1) which is attached to the transition area (30) and contained in a first imaginary plane (i) perpendicular to the central axis (X), and the heat dissipating mass (40) has a wall (42) extending from the first segment (23), from an intersection point (p3) which is defined between the wall (42) and the first segment (23), with the intersection point (p3) being contained in a second imaginary plane (i') perpendicular to the central axis (X), **characterized in that** the first imaginary plane (i) is separated from the second imaginary plane (i') by a distance (D1) of at least 5 mm and the wall (42) of the heat dissipating mass (40) is a vertical wall (42) extending from the first segment (23) perpendicular to the central axis (X), with the vertical wall (42) being contained in the second imaginary plane (i').

2. Drum according to claim 1, wherein the circumferential wall (20) has in the first segment (23) a mean thickness (e1) of at least 3 mm.

3. Drum according to claim 1 or 2, wherein the circumferential wall (20) has in the second segment (24) a mean thickness (e2) of at least 8 mm.

4. Drum according to any of the preceding claims, wherein the heat dissipating mass (40) comprises a plurality of fins (41) projecting radially from the outer face (22) of the circumferential wall (20) and arranged in a circumferential succession around the central axis (X).

5. Drum according to the preceding claim, wherein the heat dissipating mass (40) further comprises channels (43) for air circulation which are arranged in a circumferential succession around the central axis (X) between the fins (41).

6. Drum according to claim 4 or 5, wherein each fin (41) has a vertical wall (42) extending from the first segment (23) perpendicular to the central axis (X) and contained in the second imaginary plane (i'), and a horizontal wall (44) extending from the vertical wall (42) in a manner substantially parallel to the central axis (X).

7. Drum according to the preceding claim, wherein the horizontal wall (44) has a triangular shape, with the thickness of the fin (41) decreasing towards the vertical wall (42).

8. Drum according to claim 6 or 7, wherein the channels (43) for air circulation extend radially between the vertical walls (42) and axially between the horizontal walls (44) of the fins (41).

9. Drum according to any of the preceding claims, wherein the rear wall (10) has an outer face (11) for being connected to the wheel and is contained in a third imaginary plane (i") perpendicular to the central axis (X), and wherein the second imaginary plane (i') is separated from the third imaginary plane (i) by a distance of at least 27 mm.

10. Drum according to any of the preceding claims, which is manufactured from a hypereutectic aluminium-silicon alloy having a silicon content of 13 to 21% by weight and a maximum copper content of 0.3% by weight.

11. Drum according to the preceding claim, wherein the hypereutectic aluminium-silicon alloy has between
13-21% by weight of silicon,
0.2-0.7% by weight of magnesium,
maximum 0.001% by weight of strontium,
maximum 0.2% by weight of iron,
0.06-0.1% by weight of titanium,
maximum 0.3% by weight of copper, and
the rest aluminium.

12. Drum according to any of claims 9 to 11, wherein the hypereutectic aluminium-silicon alloy has silicon particles with a primary silicon particle size of 30 to 100 µm, preferably of 30 to 50 µm, more preferably a maximum of 50 µm.

13. Drum brake for vehicles comprising a drum (100) according to any of the preceding claims.

## Patentansprüche

1. Trommel für eine aus einer Aluminiumlegierung einstückig gefertigte Trommelbremse mit einer Mittelachse (X), einer sich senkrecht zur Mittelachse (X) erstreckenden Rückwand (10) zur Verbindung mit einem Rad, einer sich parallel zur Mittelachse (X) erstreckenden umlaufenden Wand (20) und einem die umlaufende Wand (20) mit der Rückwand (10) verbindenden Übergangsbereich (30), wobei die umlaufende Wand (20) eine Innenfläche (21) und eine der Innenfläche (21) gegenüberliegende Außenfläche (22) aufweist, die Innenfläche (21) eine Bremsfläche zur Anlage von Bremsbacken (200) der Trommelbremse bildet und die Außenfläche (22) eine von der Außenfläche (22) radial wegragende wärmeableitende Masse (40) aufweist, wobei die umlaufende Wand (20) an der Außenfläche (22) ein erstes vom Übergangsbereich (30) ausgehendes Segment (23) ohne wärmeableitende Masse (40) und ein zweites vom ersten Segment (23) ausgehendes Segment (24) mit der daran angeordneten wärmeableitenden Masse (40) aufweist, sodass die umlaufende Wand (20) im zweiten Segment (24) dicker als im ersten Segment (23) ist, die Innenfläche (21) parallel zur Mittelachse (X) ist und von einem an den Übergangsbereich (30) angeschlossenen ersten Punkt (p1), der in einer ersten zur Mittelachse (X) senkrechten imaginären Ebene (i) liegt, ausgeht, und die wärmeableitende Masse (40) eine Wand (42) aufweist, die vom ersten Segment (23), von einem zwischen der Wand (42) und dem ersten Segment (23) gebildeten Schnittpunkt (p3) ausgeht, wobei der Schnittpunkt (p3) in einer zweiten zur Mittelachse (X) senkrechten imaginären Ebene (i') liegt, **dadurch gekennzeichnet, dass** die erste imaginäre Ebene (i) durch einen Abstand (D1) von mindestens 5 mm von der zweiten imaginären Ebene (i') getrennt ist und die Wand (42) der wärmeableitenden Masse (40) eine senkrecht zur Mittelachse (X) vom ersten Segment (23) ausgehende vertikale Wand (42) ist, wobei die vertikale Wand (42) in der zweiten imaginären Ebene (i') liegt.

2. Trommel nach Anspruch 1, wobei die umlaufende Wand (20) im ersten Segment (23) eine mittlere Dicke (e1) von mindestens 3 mm aufweist.

3. Trommel nach Anspruch 1 oder 2, wobei die umlaufende Wand (20) im zweiten Segment (24) eine mittlere Dicke (e2) von mindestens 8 mm aufweist.

4. Trommel nach einem der vorstehenden Ansprüche, wobei die wärmeableitende Masse (40) eine Vielzahl von radial von der Außenfläche (22) der umlaufenden Wand (20) wegragenden Rippen (41), die in Umfangsrichtung aufeinanderfolgend um die Mittelachse (X) angeordnet sind, aufweist.

5. Trommel nach vorstehendem Anspruch, wobei die wärmeableitende Masse (40) ferner Kanäle (43) zur Luftzirkulation, die in Umfangsrichtung aufeinanderfolgend zwischen den Rippen (41) um die Mittelachse (X) angeordnet sind, aufweist.

6. Trommel nach Anspruch 4 oder 5, wobei jede Rippe (41) eine senkrecht zur Mittelachse (X) vom ersten Segment (23) ausgehende und in der zweiten imaginären Ebene (i') liegende vertikale Wand (42) und eine von der vertikalen Wand (42) im wesentlichen parallel zur Mittelachse (X) ausgehende horizontale Wand (44) aufweist.

7. Trommel nach vorstehendem Anspruch, wobei die horizontale Wand (44) eine dreieckige Form hat und die Dicke der Rippe (41) in Richtung der vertikalen Wand (42) abnimmt.

8. Trommel nach Anspruch 6 oder 7, wobei die Kanäle (43) zur Luftzirkulation zwischen den vertikalen Wänden (42) radial und zwischen den horizontalen Wänden (44) der Rippen (41) axial verlaufen.

9. Trommel nach einem der vorstehenden Ansprüche, wobei die Rückwand (10) eine Außenfläche (11) zur Verbindung mit dem Rad aufweist und in einer dritten imaginären Ebene (i") senkrecht zur Mittelachse (X) liegt und wobei die zweite imaginäre Ebene (i') durch einen Abstand von mindestens 27 mm von der dritten imaginären Ebene (i) getrennt ist.

10. Trommel nach einem der vorstehenden Ansprüche, bestehend aus einer übereutektischen Aluminium-Silizium-Legierung mit einem Siliziumgehalt von 13 bis 21 Gew.-% und einem maximalen Kupfergehalt von 0,3 Gew.-%.

11. Trommel nach vorstehendem Anspruch, wobei die übereutektische Aluminium-Silizium-Legierung folgende Zusammensetzung aufweist: 13 - 21 Gew.-% Silizium,
0,2 - 0,7 Gew.-% Magnesium,
maximal 0,001 Gew.-% Strontium,
maximal 0,2 Gew.-% Eisen,
0,06 - 0,1 Gew.-% Titan,
maximal 0,3 Gew.-% Kupfer und
als Rest Aluminium.

12. Trommel nach einem der Ansprüche 9 bis 11, wobei die übereutektische Aluminium-Silizium-Legierung Siliziumteilchen mit einer primären Siliziumteilchengröße von 30 bis 100 µm, vorzugsweise von 30 bis 50 µm, besonders bevorzugt von maximal 50 µm, aufweist.

13. Trommelbremse für Fahrzeuge mit einer Trommel (100) nach einem der vorstehenden Ansprüche.

## Revendications

1. Tambour pour un frein à tambour fabriqué d'une seule pièce en alliage d'aluminium et comprenant un axe central (X), une paroi arrière (10) pour être connectée à une roue et s'étendant perpendiculairement à l'axe central (X), une paroi circonférentielle (20) s'étendant parallèlement à l'axe central (X), et une zone de transition (30) reliant la paroi circonférentielle (20) avec la paroi arrière (10), la paroi circonférentielle (20) présente une face interne (21) et une face externe (22) qui est opposée à la face interne (21), la face interne (21) définit une surface de freinage pour être mise en contact avec des patins de freinage (200) du frein à tambour, et la face externe (22) présente une masse de dissipation de chaleur (40) faisant saillie radialement à partir de la face externe (22), la paroi circonférentielle (20) présente, dans la face externe (22), un premier segment (23) exempt de masse de dissipation de chaleur (40) s'étendant à partir de la zone de transition (30) et un deuxième segment (24) dans lequel est disposée la masse de dissipation de chaleur (40) et qui s'étend à partir du premier segment (23), de sorte que la paroi circonférentielle (20) est plus épaisse dans le deuxième segment (24) que dans le premier segment (23), la face interne (21) est parallèle à l'axe central (X) et s'étend à partir d'un premier point (p1) qui est attaché à la zone de transition (30) et contenu dans un premier plan imaginaire (i) perpendiculaire à l'axe central (X), et la masse de dissipation de chaleur (40) présente une paroi (42) s'étendant à partir du premier segment (23), à partir d'un point d'intersection (p3) qui est défini entre la paroi (42) et le premier segment (23), le point d'intersection (p3) étant contenu dans un deuxième plan imaginaire (i') perpendiculaire à l'axe central (X), **caractérisé en ce que** le premier plan imaginaire (i) est séparé du deuxième plan imaginaire (i') d'une distance (D1) d'au moins 5 mm et la paroi (42) de la masse de dissipation de chaleur (40) est une paroi verticale (42) s'étendant à partir du premier segment (23) perpendiculaire à l'axe central (X), la paroi verticale (42) étant contenue dans le deuxième plan imaginaire (i').

2. Tambour selon la revendication 1, dans lequel la paroi circonférentielle (20) présente, dans le premier segment (23), une épaisseur moyenne (e1) d'au moins 3 mm.

3. Tambour selon la revendication 1 ou 2, dans lequel la paroi circonférentielle (20) présente, dans le deuxième segment (24), une épaisseur moyenne (e2) d'au moins 8 mm.

4. Tambour selon l'une quelconque des revendications précédentes, dans lequel la masse de dissipation de chaleur (40) comprend une pluralité d'ailettes (41) faisant saillie radialement à partir de la face externe (22) de la paroi circonférentielle (20) et disposées dans une succession circonférentielle autour de l'axe central (X).

5. Tambour selon la revendication précédente, dans lequel la masse de dissipation de chaleur (40) comprend en outre des canaux (43) pour la circulation d'air qui sont disposés dans une succession circonférentielle autour de l'axe central (X) entre les ailettes (41).

6. Tambour selon la revendication 4 ou 5, dans lequel chaque ailette (41) présente une paroi verticale (42) s'étendant à partir du premier segment (23) perpendiculaire à l'axe central (X) et contenue dans le deuxième plan imaginaire (i'), et une paroi horizontale (44) s'étendant à partir la paroi verticale (42) d'une façon sensiblement parallèle à l'axe central (X).

7. Tambour selon la revendication précédente, dans lequel la paroi horizontale (44) présente une forme triangulaire, l'épaisseur de l'ailette (41) diminuant vers la paroi verticale (42).

8. Tambour selon la revendication 6 ou 7, dans lequel les canaux (43) pour la circulation d'air s'étendent radialement entre les parois verticales (42) et axialement entre les parois horizontales (44) des ailettes (41).

9. Tambour selon l'une quelconque des revendications précédentes, dans lequel la paroi arrière (10) présente une face externe (11) pour être connectée à la roue et est contenue dans un troisième plan imaginaire (i") perpendiculaire à l'axe central (X), et dans lequel le deuxième plan imaginaire (i') est séparé du troisième plan imaginaire (i) d'une distance d'au moins 27 mm.

10. Tambour selon l'une quelconque des revendications précédentes, qui est fabriqué en un alliage d'aluminium-silicium hypereutectique ayant une teneur en silicium de 13 à 21% en poids et une teneur en cuivre maximale de 0,3% en poids.

11. Tambour selon la revendication précédente, dans lequel l'alliage d'aluminium-silicium hypereutectique présente entre
13-21% en poids de silicium,
0,2-0,7% en poids de magnésium,
au maximum 0,001% en poids de strontium,
au maximum 0,2% en poids de fer,
0,06-0,1% en poids de titane,
au maximum 0,3% en poids de cuivre, et
le reste d'aluminium.

12. Tambour selon l'une quelconque des revendications 9 to 11, dans lequel l'alliage d'aluminium-silicium hypereutectique présente des particules de silicium avec une taille de particule de silicium primaire de 30 à 100 µm, de préférence de 30 à 50 µm, plus de préférence d'au maximum 50 µm.

13. Frein à tambour pour véhicules comprenant un tambour (100) selon l'une quelconque des revendications précédentes.
